# EUROPEAN PATENT SPECIFICATION

(11) **EP 0 413 213 B1**
(45) Date of publication and mention of the grant of the patent: **04.01.1995**
(21) Application number: 90114896.5
(22) Date of filing: 02.08.1990
(51) Int. Cl.: F02B 27/00, F02M 35/10

(54) **V-type internal combustion engine**
V-Brennkraftmaschine
Moteur à combustion interne de type en V

(30) Priority: 18.08.1989 JP 211413/89
(43) Date of publication of application: 20.02.1991
(73) Proprietor: YAMAHA HATSUDOKI KABUSHIKI KAISHA, Iwata-shi Shizuoka-ken, 438 (JP)
(72) Inventor: Yoshioka, Shinji, Hamamatsu-shi, Shizuoka-ken (JP)
(74) Representative: Grünecker, Kinkeldey, Stockmair & Schwanhäusser Anwaltssozietät

(56) References cited:
- EP-A- 0 177 794
- GB-A- 2 180 594

## Description

The present invention relates to a V-type internal combustion engine comprising a pair of cylinder banks disposed in a V-shape, each composed of a plurality of cylinders arranged in parallel to each other and an air intake system, including a surge tank which extends axially and in parellel to the crankshaft axis and is disposed between said cylinder banks, with a plurality of intake distributing pipes extending side by side alternatively along the surge tank and above of same in between said surge tank and intake ports of the opposite cylinder banks, wherein each intake port which, in turn, is adapted to be communicated to an associated cylinder, opens through an inner side surface of the associated cylinder bank, respectively,
each intake distributing pipe extends alternately from an intake port of the one cylinder bank in a curved shape above said surge tank to a connecting port of said surge tank, said connecting port being located adjacent to the other opposite cylinder bank, an upstream intake end of each intake distributing pipe adjacent to the associated connecting port of the surge tank comprising a bow to be bent inclined downwards to extend beneath the adjacent intake distributing pipe to connect to the associated connecting port of the surge tank.

It is well known in the art of multi-cylinder internal combusion engines to dispose the cylinders such that they form a pair of cylinder banks disposed in V-shape wherein the cylinders of each cylinder banks are arranged in a row in parallel to each other and slantly axially offset to the cylinders of the opposite cylinder bank with a surge tank of the air intake system located in parallel to the axis of the crankshaft between the afore-mentioned cylinder banks. The cylinder head of each of the cylinders comprises an intake port which opens through an inwardly facing side surface of the cylinder head opposite to the surge tank. In order to connect each of the intake ports of the cylinders of both opposite cylinders banks to connecting ports of the surge tank a plurality of air intake distributing pipes is provided extending side by side alternatively within the space in between said pair of cylinder banks along the axial extension of the surge tank and above same, respectively.

Conventionally the afore-mentioned intake distributing pipes have downwardly bent upstream ends which connect to the respective connecting port portion of the surge tank from above.

Taking the overall dimension of the engine into consideration, conventionally the final intake distributing pipe positioned at the side of the transmission-free end of the crankshaft must be disposed considerably outwardly with respect to said end of the crankshaft resulting in an increase of the total length of the surge tank.

Moreover, conventional V-type engines are adapted to be equipped with the auxiliaries such as the crankshaft driven water pump, throttle body housing the throttle valve etc. at the one end side of the cylinder banks, resulting in an increased total lenth of the engine as said auxiliaries project outwardly exceeding the axial length of the cylinder banks.

A V-type internal combustion engine comprising a pair of cylinder banks disposed in V-shape, as indicated in the preamble of claim 1, is disclosed in EP-A-0 177 794. In that case, all intake distributing pipes have the same form and length. The upstream intake end of each intake distributing pipe comprises a bow to be bent inclined downwards to extend beneath the adjacent intake distributing pipe to connect to the associated connecting port of the surge tank. Said connecting ports are substantially located beneath said adjacent intake distributing pipe, due to the order of the ignition of each cylinder and the disposal of a different associated surge tank regions. Accordingly, the disposal of the connecting ports relative to the intake port requires more space for the intake distributing pipes, which is undesirable for coping with the problems of a compacted V-type engine.

Accordingly, it is an objective of the present invention, to provide an improved V-type internal combustion engine comprising an intake system adapted to reduce the axially length of a surge tank in order to render the engine more compact to reduce its overall dimensions in particular in the direction of the crankshaft axis while simplifying the piping of the intake system but assuring the necessary length of the intake distributing pipes.

The present invention, in order to achieve the afore indicated objectives, encompasses an V-type internal combustion engine as indicated in the precharacterising portion of claim 1 which is characterized in that the intake distributing pipes extend in parallel under an acute angle with respect to a longitudinal axis of the surge tank, and that each connecting port is substantially located under said adjacent intake distributing pipe, and that a notional line connecting the centres of the intake ports of opposite cylinders is inclined oppositely with respect to the surge tank's longitudinal axis compared to the inclination of the intake distributing pipes.

Thus a plurality of intake distributing pipes is connected to the air intake ports of the cylinder banks, extends through the space above the surge tank towards the opposite cylinder bank in a curved configuration and is disposed above the surge tank side by side alternatively along the axial extension of the surge tank in parallel to the direction of the crankshaft axis. In order to establish connection to the respective intake port of the surge tank, the upstream intake end (or elongated upstream end) of each intake distributing pipe is curved downwards and inclined to meet the associated port at the top surface of the surge tank and is substantially located under the neighboured intake distributing pipe which extends from a cylinder of the opposite cylinder bank of the V-shaped disposal of the cylinders.

Preferred embodiments of the present invention are laid down in the sub-claims.

The V-type internal combustion engine according to the present invention allows to render the engine more compact to a considerable extent both in terms of the layout of the air intake system but also in terms of the overall axial length of the engine in the direction of the crankshaft axis. As each connecting port of the surge tank to which an intake distributing pipe is to be connected from above is disposed not beside the adjacent other intake distributing pipe but is located substantially under said pipe even the final connecting port for the intake distributing pipe which is positioned on the end side of the crankshaft will not be located considerably axially outside of the end of the crankshaft rendering the total length of the surge tank considerably shorter than conventionally.

Moreover, as the elongated upstream end of each intake distributing pipe extends inclined beneath the adjacent intake distributing pipe entering the space under said pipe which extends from a cylinder of the opposite cylinder bank the necessary length of each intake pipe can be assured or can even be increased within the limited space available between both cylinder banks contributing to enhance the air intake charging efficiency. Moreover, as the length of the surge tank can be reduced space becomes available to dispose auxiliaries such as the throttle body and the water pump longitudinally on both sides of the surge tank and can be assembled relatively close to each other leading to a reduced overall length of the engine as the amount the throttle housing and the water pump now still project axially outwards of the crankshaft can be reduced. Finally the new arrangement enables to elongate the upstream end of each air intake distributing pipe so that the length of said intake distributing pipes can be secured to be as long as ever possible in said limited space available. Thus, even though an optimal length of each air intake pipe within the limited space in between the pair of cylinder banks is assured these intake distributing pipes will not be entangled intricately between both cylinder banks but the shape of the piping will be simplified.

Further objectives, features and advantages of the present invention will become more apparent from the following description as specific embodiment of the present invention in conjunction with the associated drawings, wherein:
Figure 1 is a plan view of a portion of the intake system showing the structure around a surge tank of a V-type internal combustion engine according to the present invention,
Figure 2 is a portion of a section of a front view of a V-type internal combustion engine according to the present invention,
Figure 3 is a plan view of a V-type internal combustion engine according to the present invention,
Figure 4 is a side view of essential components of the intake system showing the structure around a surge tank embodying the present invention.

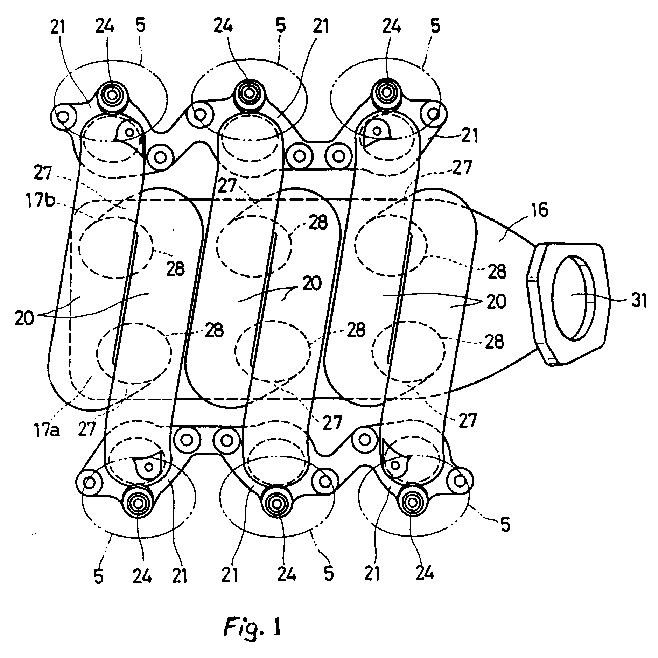

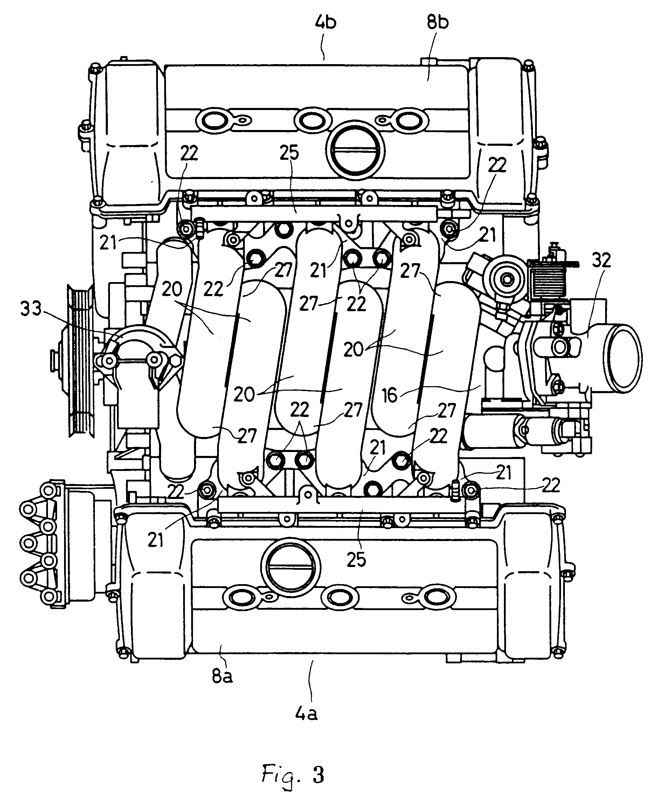

In the following a non-limititive embodiment of the present invention as explained in greater detail referring to the drawings figures 1 to 4 which show a V-type 6-cylinder internal combustion engine for passenger cause.

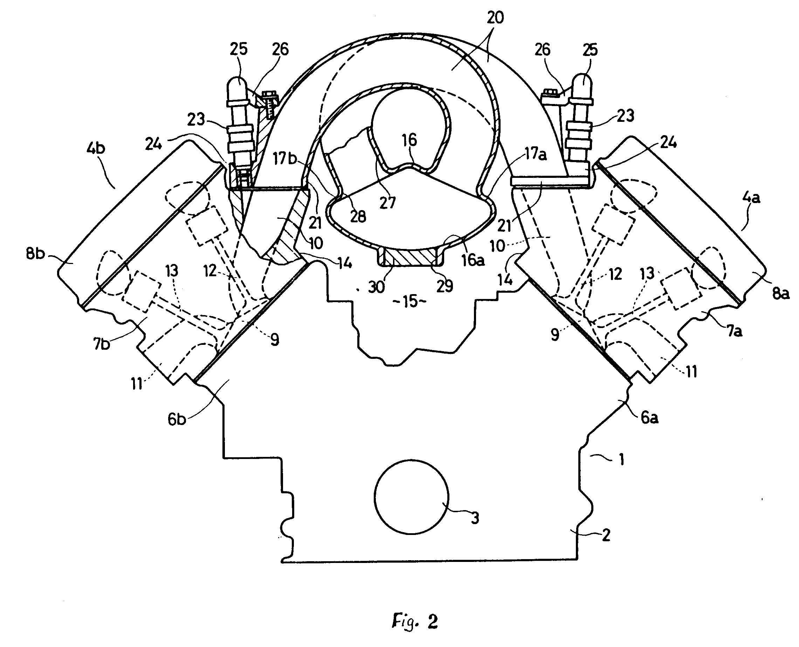

Referring to all figures 1 to 4 in general and more specifically to figure 2 the internal combustion engine (in the following engine) includes a cylinder block 1 provided with a lower case 2 adapted for rotatably supporting a crankshaft 3. The lower case 2 has a pair of cylinder banks 4a,4b which arise on its top surface in V-shape wherein each of the cylinder banks 4a,4b is composed of a cylinder body 6a,6b comprising three cylinders 5, respectively, arranged along the axial extension of the crankshaft 3, a cylinder head 7a,7b covering the top surface of the cylinder bodys 6a,6b and a head cover 8a,8b, wherein the cylinder bodys 6a,6b are incorporated with the lower case 2.

The pistons (not shown) for two cylinders 5 which are substantially opposite to each other in V-shape are connected to the common crankshaft 3 through respective connecting rods, as usual, leading to the cylinders 5 to be axially offset in axial direction of the crankshaft 3, shown in figure 1.

The cylinder head 7a,7b of each cylinder bank 4a,4b includes an intake port 10 and an exhaust port 11 for each of the cylinders 5 to communicate to the combustion chamber 9 of each of the cylinders 5. The intake ports and exhaust ports for each cylinder are individually opened and closed by intake valves 12 and exhaust valves 13, respectively.

The intake ports 10 of each cylinder bank 4a,4b are arranged in one row on an inner side surface 14 of each cylinder 7a,7b disposed opposite to each other, said intake ports 10 facing upwardly.

Within the generally V-shaped space 15 confined in between both cylinder banks 4a,4b a surge tank 16 is disposed which extends substantially in parallel to the direction of the crankshaft axis. The surge tank 16 is formed like an elongated box extending in the axially direction of the engine, disposed in between both cylinder heads 7a,7b of the cylinder banks 4a,4b in such a manner that it is positioned lower than the opening of each intake port 10. The surge tank 16 provides a top surface with inclined flattened areas which intersect under an obtuse angle along a rounded top edge of the surge tank, with two slopes 17a,17b as shown in cross section and figure 2. The intake ports 10 for each cylinder bank 4a,4b are positioned beside these two slopes 17a,17b.

As usual, the intake ports of the cylinder banks 4a,4b are connected to the surge tank 16 through intake distributing pipes 20, one for each cylinder. As shown in figures 1 and 2 the intake distributing pipes 20 extend in an alternating manner through the space above the surge tank 16 from the one cylinder bank 4b towards the other cylinder bank 4a to connect to the surge tank 16 close to the opposite cylinder bank 4b, and vice versa. Moreover these six intake distributing pipes 20 are arranged very close to one another side by side alternately along the surge tanke 16, i.e. along the direction the crankshaft extends. As specifically shown in figure 2 above the surge tank 16 the intake distributing pipes 20 extend curved upward in the shape of a circular arc, leaving an elongate intake upstream end portion 27 and an intake downstream end to be curved downwards leading the elongated intake upstream end 27 to be connected to the surge tank 16 at its slope 17a,17b adjacent to the cylinder banks 4a,4b on opposite sides, thus connecting the intake ports 10 of each cylinder 5 to a connecting port 28 disposed distant near the opposite cylinder 5 on the top surface of the surge tank 16.

At its downstream end for connecting to the cylinder head each intake distributing pipe 20 has a flanged portion 21, formed thereon. The flanged portions 21 of adajcent intake distributing pipes 20 are joined with each other and are fastened on the opening periphery portion of each intake port 10 of both cylinder banks 4a,4b through bolts 40. Each of said flanged portions 21 has a mounting seat 24 adapted to support a fuel injection valve 23 provided for each intake distributing pipe 20. Each fuel injection valve 23 is mounted generally upright along the intake downstream end of each intake distributing pipe 20 and a delivery pipe 25 which extends substantially in parallel to the associated cylinder bank 4a,4b, respectively, is bolt-fastened on the outside surface of each intake distributing pipe 20 or an adjacent seat portion through brackets 26.

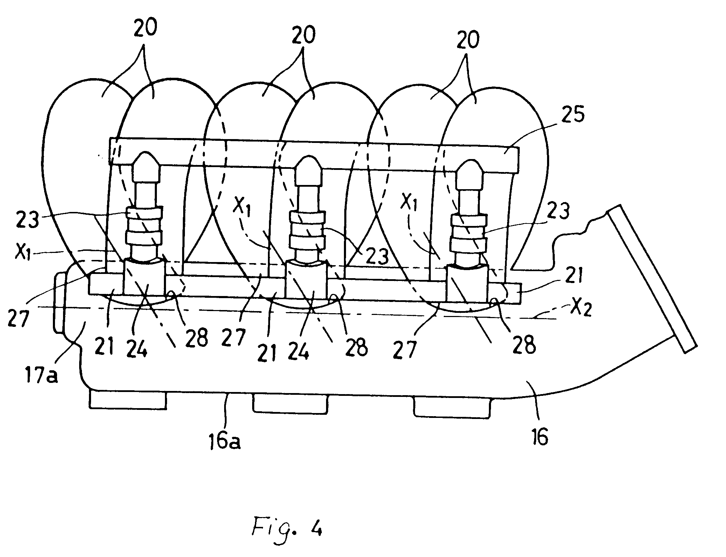

An important aspect of the present invention resides in the fact, that the intake upstream end or elongated upstream end portion 27 of each intake distributing pipe 20, which establish communication with the surge tank 16 is smoothly elongated and inclined in such a direction that it enters the space under the next adjacent intake distributing point extending from a cylinder 5 of the opposite cylinder bank 4a,4b and this elongated upstream end portion 27 is connected to the slope 17a,17b of the surge tank 16 at the area of the connecting port 28 which is almost completely disposed beneath said neighboured intake distributing pipe 20 extending to or from an opposite cylinder 5. Thus, a considerable dimensional compacting of the alternately extending intake distributing pipes 20 along the surge tank 16 and, consequently, a reduced length of the latter can be obtained through the measure that the connecting ports 28 of one intake distributing pipe 20 which is to be connected to the surge tank 16, is positioned substantially under the other adjacent intake distributing pipe 20 extending from the opposite cylinder 5, as specifically shown in figures 1 and 4. Moreover, the elongated intake upstream portion 27 is curved in a circular arc in its side view as shown in figure 4 and its axis line X₁ as slantly inclined to a notional axis line X₂ of the surge tank 16.

In the present embodiment the surge tank 16, the intake distributing pipes 20 and the flange portions 12 are made integrally as a one piece cast-formed unit and the bottom surface 16a of the surge tank 16 is curved downward in a circular arc as well. Thus, taking the oppositely inclined top surface of the surge tank 16 into consideration, the cross sectional shape of the surge tank 16 is made generally elliptical.

For manufacturing reasons, specifically in order to be able to insert a router for deburring the opening portion of each of the connecting ports 28 the bottom surface 16a of the surge tank 16 contains through holes 29 which are closed by blanking covers 30.

As shown in figures 1, 3 and 4 the intake upstream end of the surge tank 16 has an opening portion 31 formed at a position outwards of the space through which the intake distributing pipes 20 extend. A throttle body 32 containing a throttle valve (not shown) is supported by said opening portion 31 and said throttle body is projected outwards from the space 15 in between both cylinder banks 4a,4b.

Moreover, on the opposite side of the surge tank 16 with respect to said throttle body 32, i.e at the opposite axial end of the surge tank 16 a water pump 33 is disposed. Said water pump 33 also enters the space 15 between said pair of cylinder banks 4a,4b, resulting in a design that on both longitudinal ends of the surge tank 16 an auxiliary such as the throttle body 32 or the water pump 33 are disposed.

Even though the intake distributing pipes 20 for the 6-cylinders 5 which are disposed opposite to each other in a V-shape configuration are disposed to extend above the surge tank 16 the connecting ports 28 of these intake distributing pipes 20 on the surge tank 16 can be disposed with a positional relationship in which these are generally opposite to each other on both sides of a longitudinal axis, X₂ of the surge tank 16 and, correspondingly, on both sides of the crankshaft axis, as shown in figures 1 and 2. The afore-indicated preferred design is the result of the layout of the air intake system according to the present invention, namely that the upstream end portion 27 of each of the intake distributing pipes 20 facing to the surge tank 16 is elongated and inclined in such a manner that it enters the space beneath the next intake distributing pipe which extends froma cylinder 5 of the opposite cylinder bank 4a,4b as the connecting port 28 of the surge tank 16 to which said elongated upstream portion 27 of the respective intake distributing pipe is to be connected, is positioned substantially under the afore-mentioned adjacent intake distributing pipe 20 which substantially overlaps said connecting port 28. In this way, taking the slight axial offset of the cylinders 5 of the two cylinder banks 4a,4b in V-type arrangement into consideration there is a slight deviation from a perpendicular direction the intake distributing pipes 20 extend with respect to the longitudinal axis of the surge tank 16 or the crankshaft axis. Said positioning is optimal to obtain a highly compacted engine with a short dimensional overall length in the direction of the crankshaft axis.

Thus, even the final connecting port 20 associated to an intake distributing pipe 20 positioned on the end side of the crankshaft 3 will not be disposed axially outside of the extension of the crankshaft 3 but shifted axially inwards and the total length of the surge tank 16 can be restrained to be considerably shorter than usual.

As a consequence, the throttle body 32 and the water pump 33 positioned at both longitudinal end sides of the surge tank 16 can be assembled in as much closer to each other as the total length of the surge tank 16 is shortened and, moreover, the total dimensions of the engine in axial direction (direction of the crankshaft axis) is reduced by means of reducing the amount the throttle body 32 and the water pump 33 axially project outwards over a length determined by the axial length of the crankshaft 3.

Additionally, with the elongation of the upstream elongated end of each intake distributing pipe 20 the length of each intake distributing pipe 20 can be assured to be as long as appropriate within the frame work of the limited space in between the V-shaped arrangment of the cylinder banks. Thus, the length of each intake distributing pipe 20 is close to the upmost possible length within given space. Therefore the intake inertia effect is improved particularly within the low to medium speed operating range of the engine and the intake charging efficiency can be raised.

Since the intake upstream end 27 of each intake distributing pipe 20 is required only to be elongated as far as the space under the adjacent intake distributing pipe 20 allows moreover, it should be noted, that these intake distributing pipes will not be entangled intricately between both cylinder banks 4a and 4b, enabling the shape of the piping to remain simple or to become even more simplified.

In the present embodiment the cross section of shape of the surge tank 16 is substantially elliptical by forming the bottom surface 16a of the surge tank 16 in a downwardly projecting circular arc while shaping its top surface slightly roof-shaped, there is also an advantage that no intake air pool will be caused within the surge tank 16 (which could cause difficulties in smooth intake air flow) and the flow resistance for the incoming air flow can be reduced to improve the air intake charging efficiency.

In the present embodiment the air intake system comprising the surge tank 16 and the intake distributing pipes 20 were shown to be integrally cast-formed in a one piece shape. However, the present invention is not limited to such a design but, for example, the distributing pipes 20 could be fabricated as members separate from the surge tank 16 and joined to it detachable.

According to the present invention as explained by example above the most outwardly disposed connecting port is associated to an intake distributing pipe 20 positioned on the side of the end of the crankshaft will not be disposed axially outwards of the end of the crankshaft and the total length of the surge tank 16 can be considerably reduced by shifting said connecting port axially inwards under the preceding intake distributing pipe 20.

Accordingly, even in cases where various kinds of engine auxiliaries are disposed on the longitudinal end portions on both sides of the surge tank 16 the amounts of these auxiliaries project outwards beyond the end of the crankshaft in longitudinal direction can be reduced rendering the engine more compact and tidy by restraining the total length of the engine to be shorter than usual.

Finally, it is of benefit that the pipe length of the intake distributing pipes 20 can be secured longer to the upmost within the limited space available. Thus the intake efficiency within the low intermediate speed operating range is improved and, simultaneously, any intricately entangling of the intake distributing pipes in between both cylinder banks 4a,4b can be prevented while simplifying the shape of the piping.

## Claims

1. A V-type internal combustion engine comprising a pair of cylinder banks (4a, 4b) disposed in V-shape, each composed of a plurality of cylinders (5) arranged in parallel to each other and an air intake system including a surge tank (16) which extends axially and in parallel to the crankshaft axis and is disposed between said cylinder banks (4a, 4b), with a plurality of intake air distributing pipes (20) extending side by side alternately along the surge tank (16) and above of same in between the surge tank (16) and intake ports (10) of the opposite cylinder banks (4a, 4b), wherein each intake port (10) which, in turn, is adapted to be communicated to an associated cylinder (5) opens through an inner side surface of the cylinder banks (4a, 4b), respectively,
each intake distributing pipe (20) extends alternately from an intake port (10) of the one cylinder bank (4a, 4b) in a curved shape above said surge tank (16) to a connecting port (28) of said surge tank (16), said connecting port (28) being located adjacent to the other opposite cylinder bank (4a, 4b),
an upstream intake end (27) of each intake distributing pipe (20) adjacent to the associated connecting port (28) of the surge tank (16) comprising a bow to be bent inclined downwards to extend beneath the adjacent intake distributing pipe (20) to connect to the associated connecting port (28) of the surge tank (16),
**characterized in that**
the intake distributing pipes (20) extend in parallel under an acute angle with respect to a longitudinal axis (X₂) of the surge tank (16), and that each connecting port (28) is substantially located under said adjacent intake distributing pipe (20), and that a notional line connecting the centres of the intake ports (10) of opposite cylinders is inclined oppositely with respect to the surge tank's longitudinal axis (X₂) compared to the inclination of the intake distributing pipes (20).

2. A V-type internal combustion engine as claimed in claim 1,
**characterized in that,**
said surge tank (16) comprises an upwardly facing surface portion including two axial rows of connecting ports which are disposed axially offset from one another on both sides of an notional longitudinal axis (X₂) of the surge tank (16), each connecting port (28) being connected to a certain intake port (10) of a cylinder (5) which is located oppositely at the other side of the notional longitudinal axis (X₂) by means of the associated intake distributing pipe (20) which extends substantially in an arcuate shape from the intake port (10) of the cylinder (5) to the connecting port (28) of the surge tank (16) including said upstream intake end to form an inclined elongated portion (27) next to the associated connecting port (28) which is substantially overlapped by a neighboured intake distributing pipe (20) extending to a cylinder (5) of the other opposite cylinder bank (4a;4b).

3. A V-type internal combustion engine as claimed in claims 1 or 2,
**characterized in that,**
said surge tank (16) and the intake distributing pipes (20) are integrally cast as a one piece unit.

4. A V-type internal combustion engine as claimed in at least one of the preceding claims 1 to 3,
**characterized in that,**
the elongated inclined portion (27) of each of the intake distributing pipes (20), additionally, is curved in a circular arc and its axis line (X₁) is slantly inclined to the notional axis line (X₂) of the surge tank (16).

5. A V-type internal combustion engine as claimed in at least one of the preceding claims 1 to 4,
**characterized in that,**
the surge tank (16), in cross section, approaches to an elliptical shape with its upwardly facing top surface area including the connecting ports (28) being flattened at least within the area of the both rows of connecting ports (28), said flattened areas intersect at an obtuse angle at the mid-top portion of the surge tank (16).

6. A V-type internal combustion engine as claimed in at least one of the preceding claims 1 to 5,
**characterized in that,**
the surge tank (16) establishes two side slopes (17a,17b) to which the inclined elongated upstream ends (27) of the intake distributing pipes (20) are connected.

7. A V-type internal combustion engine as claimed in at least one of the preceding claims 1 to 6,
**characterized in that,**
each intake distributing pipe (20) connects to the respective intake ports (10) of the relevant cylinder via a flange portion (21) providing a mount seat (24) for a fuel injection valve (23).

8. A V-type internal combustion engine as claimed in claim 7,
**characterized in that,**
the flange portions (21) of adjacent intake distributing pipes (20) are joined with each other and are fastened on the opening periphery portion of each intake port (10) of both cylinder banks (4a,4b) through bolts (40).

9. A V-type internal combustion engine as claimed in claim 8,
**characterized in that,**
each fuel injection valve (23) is mounted generally upright along the intake downstream end of each intake distributing pipe (20) connected among each other through a fuel delivery pipe (25) for distributing fuel to these fuel injection valves (23) which are supported by mounting seats (24) formed for every intake distributing pipe (20).

10. A V-type internal combustion engine as claimed in at least one of the preceding claims 1 to 9,
**characterized in that,**
a throttle body (32) containing a throttle valve is connected to an opening portion (31) at the intake upstream end of the surge tank (16) whereas auxilliaries, such as a water pump (33), are positioned longitudinally opposite to the throttle body (32) at the other end of the surge tank (16).

## Patentansprüche

1. Brennkraftmaschine vom V-Typ mit einem Paar Zylinderbänke (4a, 4b), die in V-Form angeordnet sind, jede bestehend aus einer Mehrzahl von Zylindern (5), die parallel zueinander angeordnet sind und einem Lufteinlaßsystem mit einem Druckausgleichsbehälter (16), der sich axial und parallel zur Kurbelwellenachse erstreckt und zwischen den Zylinderbänken (4a, 4b) angeordnet ist, mit einer Mehrzahl von Ansaugluft-Verteilerrohren (20), die sich alternierend entlang des Druckausgleichsbehälters (16) und oberhalb desselben zwischen dem Druckausgleichsbehälter (16) und Einlaßöffnungen (10) der gegenüberliegenden Zylinderbänke (4a, 4b) erstrecken, wobei sich jede Einlaßöffnung (10), die ihrerseits vorgesehen ist, mit dem zugehörigen Zylindern (5) verbunden zu sein, sich durch eine innere Seitenfläche der Zylinderbänke (4a, 4b) jeweils öffnet,
wobei sich jedes Einlaßverteilerrohr (20) alternierend von einer Einlaßöffnung (10) der einen Zylinderbank (4a, 4b) in gekrümmter Form oberhalb des Druckausgieichsbehälters (16) zu einer Verbindungsöffnung (28) des Druckausgleichsbehälters (16) erstreckt, wobei die Verbindungsöffnung (28) benachbart zu der anderen, gegenüberliegenden Zylinderbank (4a, 4b) so angeordnet ist,
und ein stromaufseitiges Einlaßende (27) jedes Einlaßverteilerrohres (20) benachbart zu der zugehörigen Verbindungsöffnung (28) des Druckausgleichsbehälters (16) eine Krümmung aufweist, um geneigt nach abwärts gebogen zu sein, um sich unterhalb des benachbarten Einlaßverteilerrohres (20) zu erstrecken, zur Verbindung mit der zugehörigen Verbindungsöffnung (28) des Druckausgleichsbehälters (16),
**dadurch gekennzeichnet**, daß
sich die Einlaßverteilerrohre im spitzen Winkel in bezug auf eine Längsachse (X₂) des Druckausgleichsbehälters (16) erstrecken, und daß eine gedachte Linie, die die Mitten der Einlaßöffnungen (10) der gegenüberliegenden Zylinder gegensätzlich in bezug auf die Längsachse (X₂)des Druckausgleichsbehälters verglichen mit der Neigung der Einlaßverteilerrohre (20) geneigt ist.

2. Brenkkraftmaschine von V-Typ nach Anspruch 1, **dadurch gekennzeichnet**, daß
der Druckausgleichsbehälter (16) einen nach oben weisenden Oberflächenabschnitt aufweist, der zwei axiale Reihen von Verbindungsöffnungen enthält, die axial voneinander an beiden Seiten einer gedachten Längsachse (X₂) des Druckausgleichsbehälters (16) versetzt angeordnet sind, wobei jede Verbindungsöffnung (28) mit einer bestimmten Einlaßöffnung (10) eines Zylinders (5), der gegenüberliegend an der anderen Seite der gedachten Längsachse (X₂) angeordnet ist, durch das zugehörige Einlaßverteilerrohr (20) verbunden ist, das sich im wesentlichen in bogenförmiger Form von der Einlaßöffnung (10) des Zylinders (5) zu der Verbindungsöffnung (28) des Druckausgleichsbehälters (16) erstreckt, wobei das stromaufseitige Einlaßende einen geneigten langgestreckten Abschnitt (27) benachbart zu der zugehörigen Verbindungsöffnung (28) bildet, die im wesentlichen durch ein benachbartes Einlaßverteilerrohr (20) überdeckt wird, das sich zu einem Zylinder (5) an der anderen, gegenüberliegenden Zylinderbank (4a, 4b) erstreckt.

3. Brennkraftmaschine vom V-Typ nach Anspruch 1 oder 2, **dadurch gekennzeichnet**, daß der Druckausgleichsbehälter (16) und die Einlaßverteilerrohre (20) integral als eine einstückige Einheit gegossen sind.

4. Brennkraftmaschine vom V-Typ nach zumindest einem der vorhergehenden Ansprüche 1 bis 3, **dadurch gekennzeichnet**, daß der langgestreckte, geneigte Abschnitt (27) jedes der Einlaßverteilerrohre (20) zusätzlich in einem kreisförmigen Bogen gekrümmt ist und seine Achslinie (X₁) schräg gegen die gedachte Achslinie (X₂) des Druckausgleichsbehälters (16) geneigt ist.

5. Brennkraftmaschine vom V-Typ nach zumindest einem der vorhergehenden Ansprüche 1 bis 4, **dadurch gekennzeichnet**, daß der Druckausgleichsbehälter (16) im Querschnitt einer elliptischen Form angenähert ist, wobei sein nach oben weisender oberer Oberflächenbereich, der die Verbindungsöffnungen (28) enthält, zumindest im Bereich der beiden Reihen von Verbindungsöffnungen (28) abgeflacht ist, wobei die abgeflachten Bereiche einander unter einem stumpfen Winkel am oberen Mittelabschnitt des Druckausgleichsbehälters (16) schneiden.

6. Brennkraftmaschine vom V-Typ nach zumindest einem der vorhergehenden Ansprüche 1 bis 5, **dadurch gekennzeichnet**, daß der Druckausgleichsbehälter (16) zwei Seitenabschrägungen (171, 17b) aufweist, mit denen die geneigten, langgestreckten, stromaufseitigen Enden (27) der Einlaßverteilerrohre (20) verbunden sind.

7. Brennkraftmaschine vom V-Typ nach zumindest einem der vorhergehenden Ansprüche 1 bis 6, **dadurch gekennzeichnet**, daß jedes Einlaßverteilerrohr (20) mit den zugehörigen Einlaßöffnungen (10) des zugehörigen Zylinders über einen Flanschabschnitt (21) verbunden ist, der einen Montagesitz (24) für ein Kraftstoffeinspritzventil (23) bildet.

8. Brenkkraftmaschine vom V-Typ nach Anspruch 7, **dadurch gekennzeichnet**, daß die Flanschabschnitte (21) der benachbarten Einlaßverteilerrohre (20) miteinander verbunden sind und an dem Öffnungsumfangsabschnitt jeder Einlaßöffnung (10) beider Zylinderbänke (4a, 4b) durch Schrauben (40) befestigt sind.

9. Brennkraftmaschine vom V-Typ nach Anspruch 8, **dadurch gekennzeichnet**, daß jedes Kraftstoffeinspritzventil (23) im wesentlichen aufrecht entlang des stromabseitigen Einlaßendes jedes Einlaßverteilerrohres (20) angeordnet ist und diese untereinander durch ein Kraftstoffverteilerrohr (25) verbunden sind, zur Verteilung von Kraftstoff zu diesen Kraftstoffeinspritzventilen (23), die durch die Montagesitze (24) gelagert sind, die für jedes Einlaßverteilerrohr (20) ausgebildet sind.

10. Brennkraftmaschine vom V-Typ nach zumindest einem der vorhergehenden Ansprüche 1 bis 9, **dadurch gekennzeichnet**, daß ein Drosselkörper (32), der ein Drosselventil enthält, mit einem Öffnungsabschnitt (31) des stromaufseitigen Einlaßendes des Druckausgleichsbehälters (16) verbunden ist, während Zubehör, wie z.B. eine Wasserpumpe (33), in Längsrichtung gegenüberliegend zu dem Drosselkörper (32) am anderen Ende des Druckausgleichsbehälters (16) angeordnet ist.

## Revendications

1. Moteur à combustion interne du type en V, comprenant une paire de rangées (4a, 4b) de cylindres qui sont agencées en V et dont chacune est composée d'une pluralité de cylindres (5) disposés parallèlement les uns aux autres, et un système d'admission d'air muni d'un réservoir de compensation (16) qui s'étend axialement et parallèlement à l'axe du vilebrequin, et est interposé entre lesdites rangées (4a, 4b) de cylindres, avec une pluralité de tubulures (20) de distribution d'air admis, s'étendant alternativement côte à côte le long du réservoir de compensation (16) et au-dessus de ce dernier, entre ledit réservoir de compensation (16) et des orifices d'admission (10) des rangées opposées (4a, 4b) de cylindres, moteur dans lequel chaque orifice d'admission (10), conçu à son tour pour être mis en communication avec un cylindre associé (5), débouche respectivement à travers une surface intérieure des rangées (4a, 4b) de cylindres,
chaque tubulure (20) de distribution à l'admission s'étend alternativement en une forme curviligne à partir d'un orifice d'admission (10) de l'une des rangées (4a, 4b) de cylindres, au-dessus dudit réservoir de compensation (16), jusqu'à un orifice (28) de raccordement dudit réservoir de compensation (16), ledit orifice de raccordement (28) occupant une position adjacente à l'autre rangée opposée (4a, 4b) de cylindres,
une extrémité d'admission amont (27) de chaque tubulure (20) de distribution à l'admission, adjacente à l'orifice associé (28) de raccordement du réservoir de compensation (16) présentant un cintrage lui conférant une inclinaison vers le bas pour s étendre au-dessous de la tubulure adjacente (20) de distribution à l'admission, afin de rejoindre l'orifice associé (28) de raccordement du réservoir de compensation (16),
caractérisé par le fait que
les tubulures (20) de distribution à l'admission s'étendent parallèlement en décrivant un angle aigu par rapport à un axe longitudinal (X₂) du réservoir de compensation (16) ; par le fait que chaque orifice de raccordement (28) se trouve, pour l'essentiel, au-dessous de ladite tubulure adjacente (20) de distribution à l'admission ; et par le fait qu'une ligne imaginaire reliant les centres des orifices d'admission (10) de cylindres opposés présente, comparativement à l'inclinaison des tubulures (20) de distribution à l'admission, une inclinaison inverse par rapport à l'axe longitudinal (X₂) du réservoir de compensation.

2. Moteur à combustion interne selon la revendication 1,
caractérisé par le fait que
ledit réservoir de compensation (16) comprend une région superficielle orientée vers le haut et percée de deux rangs axiaux d'orifices de raccordement qui sont disposés, avec décalage axial mutuel, des deux côtés d'un axe longitudinal imaginaire (X₂) du réservoir de compensation (16), chaque orifice de raccordement (28) étant relié, à un orifice d'admission considéré (10) d'un cylindre (5) occupant une position opposée de l'autre côté de l'axe longitudinal imaginaire (X₂), au moyen de la tubulure associée (20) de distribution à l'admission qui s'étend, pour l'essentiel en une forme curviligne, de l'orifice d'admission (10) du cylindre (5) jusqu'à l'orifice (28) de raccordement du réservoir de compensation (16), comprenant ladite extrémité d'admission amant, pour former une région longiligne inclinée (27) à proximité de l'orifice de raccordement associé (28) qui est chevauché, pour l'essentiel, par une tubulure voisine (20) de distribution à l'admission s'étendant vers un cylindre (5) de l'autre rangée opposée (4a ; 4b) de cylindres.

3. Moteur à combustion interne selon les revendications 1 ou 2,
caractérisé par le fait que
ledit réservoir de compensation (16) et les tubulures (20) de distribution à l'admission sont venus solidairement de coulée en une pièce monobloc.

4. Moteur à combustion interne selon au moins l'une des revendications précédentes 1 à 3,
caractérisé par le fait que
la région longiligne inclinée (27) de chacune des tubulures (20) de distribution à l'admission est additionnellement recourbée en arc de cercle, et son axe (X₁) est incliné par rapport à l'axe imaginaire (X₂) du réservoir de compensation (16).

5. Moteur à combustion interne selon au moins l'une des revendications précédentes 1 à 4,
caractérisé par le fait que
le réservoir de compensation (16) avoisine, en coupe transversale, une configuration elliptique, sa région superficielle supérieure, orientée vers le haut et percée des orifices de raccordement (28), étant aplatie au moins à l'intérieur de la zone des deux rangs d'orifices de raccordement (28), lesdites zones aplaties se croisant selon un angle obtus dans la partie supérieure centrale du réservoir de compensation (16).

6. Moteur à combustion interne selon au moins l'une des revendications précédentes 1 à 5,
caractérisé par le fait que
le réservoir de compensation (16) définit deux rampes latérales (17a, 17b) auxquelles se rattachent les extrémités amont (27), longilignes et inclinées, des tubulures (20) de distribution à l'admission.

7. Moteur à combustion interne selon au moins l'une des revendications précédentes 1 à 6,
caractérisé par le fait que
chaque tubulure (20) de distribution à l'admission se raccorde, aux orifices respectifs d'admission (10) du cylindre considéré, à l'aide d'une zone débordante (21) ménageant un siège (24) de montage d'une soupape (23) d'injection de carburant.

8. Moteur à combustion interne selon la revendication 7,
caractérisé par le fait que
les zones débordantes (21) de tubulures adjacentes (20) de distribution à l'admission sont reliées les unes aux autres et sont fixées, par l'intermédiaire de boulons (40), à la région périphérique de l'ouverture de chaque orifice d'admission (10) des deux rangées (4a, 4b) de cylindres.

9. Moteur à combustion interne selon la revendication 8,
caractérisé par le fait que
chaque soupape (23) d'injection de carburant est montée, dans une position généralement verticale, le long de l'extrémité aval d'admission de chaque tubulure (20) de distribution à l'admission, lesquelles sont reliées les unes aux autres par l'intermédiaire d'une tubulure (25) d'alimentation en carburant, conçue pour distribuer du carburant à ces soupapes (23) d'injection de carburant qui sont supportées par des sièges de montage (24) ménagés pour chaque tubulure (20) de distribution à l'admission.

10. Moteur à combustion interne selon au moins l'une des revendications précédentes 1 à 9,
caractérisé par le fait
qu'un corps d'étranglement (32), renfermant une soupape d'étranglement, est raccordé à une région d'ouverture (31) à l'extrémité amont d'admission du réservoir de compensation (16), tandis que des groupes auxiliaires, tels qu'une pompe à eau (33), occupent des positions longitudinalement opposées au corps d'étranglement (32), à l'autre extrémité du réservoir de compensation (16).
